# EUROPÄISCHE PATENTSCHRIFT

(11) **EP 3 564 648 B1**
(45) Veröffentlichungstag und Bekanntmachung des Hinweises auf die Patenterteilung: **07.06.2023**
(21) Anmeldenummer: 19171561.4
(22) Anmeldetag: 29.04.2019
(51) Int. Cl.: G01N 11/14

(54) **VERFAHREN ZUR ERMITTLUNG DER VISKOSITÄT VON STOFFEN MIT EINEM ROTATIONSVISKOSIMETER**
METHOD FOR DETERMINING THE VISCOSITY OF MATERIALS WITH A ROTATION VISCOSIMETER
PROCÉDÉ DE DÉTERMINATION DE LA VISCOSITÉ DE SUBSTANCES À L'AIDE D'UN VISCOSIMÈTRE ROTATIF

(30) Priorität: 30.04.2018 AT 503652018; 04.05.2018 AT 503762018
(43) Veröffentlichungstag der Anmeldung: 06.11.2019
(73) Patentinhaber: Anton Paar GmbH, 8054 Graz-Straßgang (AT)
(72) Erfinder: PANITZKI, Ulf, 8010 Graz (DE); KRAXNER, Peter, 8072 Fernitz-Mellach (AT); REITER, Rudolf, 8010 Graz (AT)
(74) Vertreter: Wildhack & Jellinek

(56) Entgegenhaltungen:
- EP-A2- 0 231 873
- EP-B1- 0 231 873
- DE-A1- 3 731 317
- DE-A1- 3 731 317
- SU-A1- 1 245 948
- DAVILA C E ED - INSTITUTE OF ELECTRICAL AND ELECTRONICS ENGINEERS: "Recursive total least squares algorithms for adaptive filtering", SPEECH PROCESSING 1. TORONTO, MAY 14 - 17, 1991; [INTERNATIONAL CONFERENCE ON ACOUSTICS, SPEECH & SIGNAL PROCESSING. ICASSP], NEW YORK, IEEE, US, Bd. CONF. 16, 14. April 1991 (1991-04-14), Seiten 1853-1856, XP010043410, DOI: 10.1109/ICASSP.1991.150722 ISBN: 978-0-7803-0003-3

## Beschreibung

Die Erfindung betrifft ein Verfahren zur Ermittlung der Viskosität von Stoffen gemäß dem Oberbegriff des Patentanspruchs 1, sowie ein Rotationsviskosimeter zur Messung der Viskosität von Stoffen gemäß dem Oberbegriff des Patentanspruchs 13.

Rheometer und Viskosimeter bestimmen im Allgemeinen die Fließeigenschaften fluider Medien. Dabei sind in der Literatur keine genauen Abgrenzungen zwischen den Termini Viskosimeter und Rheometer gegeben. Im Allgemeinen sind Viskosimeter einfachere Geräte, die die Viskositäten für Prozessüberwachung und Produktion untersuchen, während hochpräzise Rheometer eher in Wissenschaft und Forschung Anwendung finden.

Während die bloße Relativmessung der Viskosität aus dem sich einstellenden Drehwinkel eines Messkörpers gegenüber der Drehvorgabe bestimmt wird, wobei eine Feder die beiden Achsen von Vorgabe und Messkörper miteinander koppelt, sind für hoch genaue Rheometer komplexere Versuchsdurchführungen und Vorgaben sowie die Ermittlung zusätzlicher Messwerte in definierten Geometrien und Distanzen/Spaltweiten der Messkörper zur Absolutwertbestimmung möglich. So ist die Bestimmung des Weissenbergeffekts aus der Normalkraftmessung sowie weitere Parameter der zu untersuchenden Proben möglich.

Für die Relativviskosimeter gilt im Allgemeinen, dass die verwendeten Messkörper mit steigendem Umfang und höherer zur Messung verwendeter Drehzahl des Viskosimeters größere Ausschläge bzw. Nachteile des Messteils gegenüber der Vorgabe ergeben.

Die Benutzer einfacherer Viskosimeter sind zumeist keine hoch spezialisierten Anwender und die Prozessüberwachung wird mithilfe von bekannten Versuchsanordnungen durchgeführt. Steht dieser Benutzer vor dem Problem der Messung einer unbekannten Substanz und/oder einer neuen Charge oder ändert sich die Probe sehr stark über den Versuchsverlauf, so gilt für ihn die Vorgangsweise, durch Versuch und Irrtum die passende Kombination aus Messkörpergeometrie und Versuchsdrehzahl zu ermitteln. Gleichzeitig gibt es eine Reihe von Messnormen, die für solche Relativmessungen "normgemäße" Drehzahlen für die Messung der Materialien vorgeben und die verwendbaren Messkörper für diese Verfahren weiter einschränken.

Zur Messung der Viskosität einer Flüssigkeit wird bei Rotationsviskosimetern ein rotationssymmetrischer Messkörper in die Flüssigkeit eingetaucht und mit konstanter Drehzahl angetrieben. Das Viskosimeter misst das für die konstante Drehzahl nötige Drehmoment oder die bewirkte Winkelauslenkung.

Mittels der bekannten Drehzahl, den bekannten Eigenschaften des Messkörpers und dem gemessenen Drehmoment bzw. der gemessenen Winkelauslenkung wird die Viskosität der Probe berechnet. Der Rheologe spricht von einer Winkelauslenkung "ϕ", die gegen die Nulllage als Bezugspunkt bzw. die Drehstellung der Motorachse gemessen wird.

Dabei wählt der Benutzer auf Grund seiner Erfahrung bzw. der Schätzung der zu erwartenden Viskosität der Probe die zur Probenflüssigkeit möglicherweise passende Drehzahl und den möglicherweise passenden Messkörper. Ungeübte Benutzer wählen oft die unpassende Drehzahl und/oder einen unpassenden Messkörper.

Bei zu niedrigen Drehzahlen oder einem zu kleinen Messkörper kann kein brauchbares Drehmoment bzw. keine brauchbare Winkelauslenkung gemessen werden. Bei zu hohen Drehzahlen oder zu großem Messkörper ist der Drehmomentsensor am mechanischen Anschlag (in der Sättigung). In beiden Fällen wird der Messbereich des Drehmomentsensors nicht optimal ausgenutzt, da die höchste Genauigkeit des Messsystems je nach Messkörper im Bereich zwischen 75 % und 95 % des maximal messbaren Drehmoments bzw. der maximalen Winkelauslenkung erreicht wird.

In der SU 1 245 948 A1 Dolotov Pavel, et al. vom 23. Juli 1986 wird ein Messverfahren eines Rotationsviskometers offenbart bei dem eine erste Lichtschranke die Drehzahl der Antriebswelle misst. Eine zweite Lichtschranke misst die Winkelauslenkung des Rotors, der durch eine Torsionsfeder mit der Antriebswelle verbunden ist. Während der Messung wird die Drehzahl solange erhöht, bis ein Winkelanschlag welcher die Winkelauslenkung der Torsionsfeder auf den linear-proportionalen Bereich beschränkt, durch ein elektrisches Signal an der Vorrichtung das Erreichen der maximalen Drehzahl meldet. Dann wird die Drehzahl reduziert und die Viskositätsmessung durch Ermitteln von Drehzahl und Winkelauslenkung fortgeführt.

Aufgabe der vorliegenden Erfindung ist es den Nutzer in der Auswahl von geeigneter Drehzahl und Messkörper zu unterstützen.

Diese Aufgabe wird durch die kennzeichnenden Merkmale des Anspruchs 1 gelöst. Dabei ist erfindungsgemäß vorgesehen, dass zur Ermittlung der Viskosität von Stoffen mit einem Rotationsviskosimeter vorgesehen ist dass das Rotationsviskosimeter eine durch einen Antrieb angetriebene Messwelle, ein, insbesondere elastisches, Koppelelement mit einer maximalen Winkelauslenkung und einer optimalen Winkelauslenkung, wobei die optimale Winkelauslenkung kleiner ist als die maximale Winkelauslenkung umfasst, wobei die Messwelle über das Koppelelement mit dem Antrieb verbunden ist, und einen Messkörper, der an einem Ende der Messwelle angeordnet und mit einer Probe beaufschlagbar ist,
wobei eine Winkelmesseinheit vorgesehen ist, die derart zu der Messwelle angeordnet und ausgebildet ist, dass die Winkelauslenkung zwischen dem Antrieb und der Messwelle im Messbetrieb messbar ist, und
wobei das Rotationsviskosimeter eine Auswerteinheit umfasst, der die durch die Winkelmesseinheit gemessene Winkelauslenkung des Koppelements zugeführt wird, wobei die optimale Winkelauslenkung des Koppelelements in der Auswerteeinheit hinterlegt ist oder dieser vor Beginn der Messung zugeführt wird,
   - wobei in einem ersten Schritt der Messkörper in einen Messbehälter mit darin befindlicher Probe eingetaucht wird,
   - wobei in einem zweiten Schritt die Drehzahl der Messwelle ausgehend von einem ersten Messpunkt mit einer Anfangsdrehzahl, insbesondere dem Stillstand, schrittweise in zumindest zwei weitere Messpunkte mit jeweiliger Drehzahl erhöht und die jeweilige Winkelauslenkung zwischen dem Antrieb und der Messwelle in den einzelnen Messpunkten ermittelt wird,
   - wobei in einem dritten Schritt eine Schätzfunktion für den Zusammenhang zwischen der Drehzahl und der Winkelauslenkung für die Probe unter Heranziehung der in den Messpunkten ermittelten Messwerte ermittelt wird,
   - wobei in einem vierten Schritt eine optimale Drehzahl anhand der Schätzfunktion ermittelt wird, bei der eine zuvor definierte optimale Winkelauslenkung vorliegt
   - wobei in einem fünften Schritt die Viskositätsmessung der Probe in der optimalen Drehzahl, durchgeführt wird.

Dieses Vorgehen führt zu besser reproduzierbaren Messergebnissen, einer rascheren Auswahl/Ergebnisbildung bei der Drehzahl und Messkörperwahl und geringerer Fehleranfälligkeit.

Unter maximaler Winkelauslenkung wird im Zusammenhang mit der vorliegenden Erfindung diejenige Winkelauslenkung verstanden bei der das Koppelelement bzw. die

Feder maximal gedehnt ist, ohne geschädigt zu werden oder die weitere elastische Verformung des Koppelelements an einem Anschlag gestoppt wird. Als optimale Winkelauslenkung, wird jene Winkelauslenkung des Koppelelements verstanden, bei der der Messfehler der Winkelmesseinheit am geringsten ist, dieser ist meist bei den verwendeten Koppelelementen nahe bei deren maximalen Winkelauslenkung.

Besonders vorteilhafte Ausführungsformen des Verfahrens werden durch die Merkmale der abhängigen Ansprüche näher definiert:
Ein besonders geringer Messfehler wird bewirkt, indem die optimale Winkelauslenkung mindestens 75 %, insbesondere größer 80 %, bevorzugt größer als 85 % besonders, bevorzugt 90 % der maximalen Winkelauslenkung des Koppelelements beträgt.

Um den Benutzer in der Auswahl des geeigneten Versuchssetups zu unterstützen, kann vorgesehen sein, dass für die Messung der Viskosität der Probe eine Anzahl von Messwellen und/oder Messkörper zur Verfügung gestellt wird, die jeweils optimale Charakteristiken für jeweilige Proben mit unterschiedlichen Viskositäten aufweisen, wobei eine beliebige erste Messwelle und/oder Messkörper für den ersten bis dritten Schritt des Verfahrens herangezogen wird,
und wobei im vierten Schritt die ermittelte optimale Drehzahl und/oder die Schätzfunktion mit für die Messung vorgeschriebenen definierten Drehzahlen verglichen wird und dass anhand der Charakteristik der Messwellen und/oder Messkörper die optimale Messwelle und/oder der optimale Messkörper für die zu untersuchende Probe ermittelt wird,
und dass die ermittelte optimale Messwelle für die Messung der Viskosität der Probe herangezogen wird.

Die Genauigkeit der Messung kann weiter verbessert werden, indem der erste bis vierte Verfahrensschritt mit der ermittelten optimalen Messwelle und/oder dem optimalen Messkörper wiederholt wird.

Um einen breiten Drehzahlbereich mit geringer Anzahl von Messpunkten untersuchen zu können, kann vorgesehen sein, dass im zweiten Schritt die Drehzahl der Messwelle ausgehend von dem ersten Messpunkt zu den jeweiligen weiteren Messpunkten mit jeweiliger Drehzahl verdoppelt wird. Bevorzugt wird dies im unteren Drehzahlbereich bis zu einer Auslenkung erfolgen, die eine messbare Auslenkung ergibt, z.B: 10 % der maximalen Auslenkung des Koppelelements bzw. der Feder.

Um einen definierten vorteilhaften Ausgangspunkt des Verfahrens zu bewirken, kann vorgesehen sein, dass im ersten oder zu Beginn des zweiten Schrittes die Winkelauslenkung im ersten Messpunkt auf einen definierten Wert, insbesondere 0°, kalibriert oder zurückgestellt wird.

Die Genauigkeit der Schätzfunktion kann weiter erhöht werden, indem die jeweilige Winkelauslenkung in jedem Messpunkt im stationären Zustand ermittelt wird. Die Geschwindigkeit der Messung kann erhöht werden, indem die Schätzfunktion neben der Drehzahl und der Winkelauslenkung auch die zeitliche Entwicklung der Messpunkte in den Schätzalgorithmus einbezieht und damit die Vorhersage der optimalen Drehzahl vor der Erreichung des stationären Zustandes der Federauslenkung berechnet.

Vorteilhaft kann vorgesehen sein, dass die Schätzfunktion durch Differenzenbildung zweier Messwerte der Winkelauslenkung und Heranziehung eines Infinite-Impulse-Response Filters ermittelt wird
oder dass die Schätzfunktion durch Heranziehung eines Recursive-Least-Square Algorithmus oder eines Kalmanfilters zur Parameterschätzung ermittelt wird.

Die Schätzfunktion kann weiters vorteilhaft ermittelt werden, wenn im zweiten Schritt die Drehzahl so lange erhöht wird, bis eine zuvor definierte maximale Winkelauslenkung vorliegt, wobei vorzugsweise bei Vorliegen der maximalen Winkelauslenkung die Messung unterbrochen wird.

Optional kann vorgesehen sein, dass zur Ermittlung der Schätzfunktion eine Anzahl von Modellparametern und/oder Vorhersagemodellen und/oder anhand von Referenzstoffen ermittelter Kalibrationsmodellen herangezogen wird.

Jeder der unterschiedlichen als Messkörper verwendbaren Rotationskörper, beispielsweise ein Zylinder, eine Scheibe oder auch ein Paddel, kann in schwierigen Substanzen, wie z.B. Schäumen oder Wachse etc. einen 'Kanal' bilden, damit ist das jeweilige Messergebnis bzw. das gemessene Drehmoment nur bedingt aussagekräftig. Durch das Hinterlegen von Kalibrationsdaten können derartige Zusammenhänge zwischen Drehzahl, Winkelauslenkung und Drehmoment besser bestimmt bzw. vorhergesagt werden und der Benutzer kann vor der Anwendung der Ergebnisse gewarnt und/oder in der Auswahl richtiger Versuchsdurchführungen, z.B. durch Wahl bestimmter Messkörpertypen, Absenken der Messkörper während der Messung in der Probe, usw. unterstützt werden.

Ähnliches gilt auch für thixotrope Substanzen, diese Materialien ändern unter Scherung ihre viskosen Eigenschaften, oft wird ihre Struktur während der Viskositätsuntersuchung zerstört und ihr Viskositätswert nimmt ab. Durch die Scherung während der Messung nimmt in solchen Materialien das für die Bewegung erforderliche Drehmoment umgekehrt proportional zur Dauer der Scherung ab. Auch hier ist eine besonders überlegte Wahl der Messkörper und Ausgabe von Warnungen an den Benutzer vorteilhaft.

Vorteilhaft kann vorgesehen sein, dass für die Messung der Viskosität der Probe eine Anzahl von austauschbaren Koppelelementen und/oder Winkelmesseinheiten und/oder Rotationsviskosimetern zur Verfügung gestellt werden, die jeweils optimale Charakteristiken für Proben mit unterschiedlichen Viskositäten aufweisen, wobei im ersten Schritt ein beliebiges erstes Koppelelement und/oder eine beliebige erste Winkelmesseinheit und/oder ein beliebiges erstes Rotationsviskosimeter für den ersten bis dritten und/oder vierten Schritt des Verfahrens herangezogen wird,
und wobei im vierten Schritt die ermittelte optimale Drehzahl und/oder die Schätzfunktion mit für die Messung vorgeschriebenen definierten Drehzahlen verglichen wird und dass anhand der Charakteristik der Koppelelemente und/oder Winkelmesseinheiten das optimale Koppelelement und/oder die optimale Winkelmesseinheit für die zu untersuchende Probe ermittelt und zur Messung der Viskosität herangezogen wird.

Ein weiterer Aspekt der vorliegenden Erfindung ist es, ein Rotationsviskosimeter bereitzustellen, mit dem das erfindungsgemäße Verfahren einfach durchgeführt werden kann. Dies wird bei einem Rotationsviskosimeter gemäß dem Oberbegriff des Patentanspruchs 13
durch die kennzeichnenden Merkmale gelöst. Dabei ist erfindungsgemäß vorgesehen, dass das Rotationsviskosimeter eine Auswerteeinheit aufweist, wobei die Auswerteeinheit derart ausgebildet und programmiert ist, dass das erfindungsgemäße Verfahren durchführbar ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

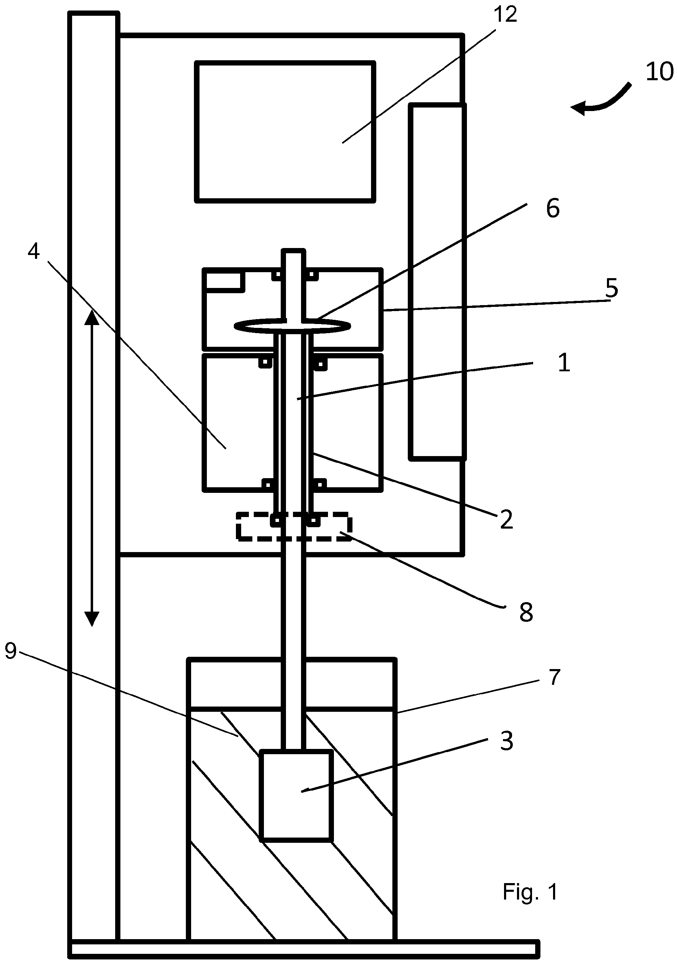

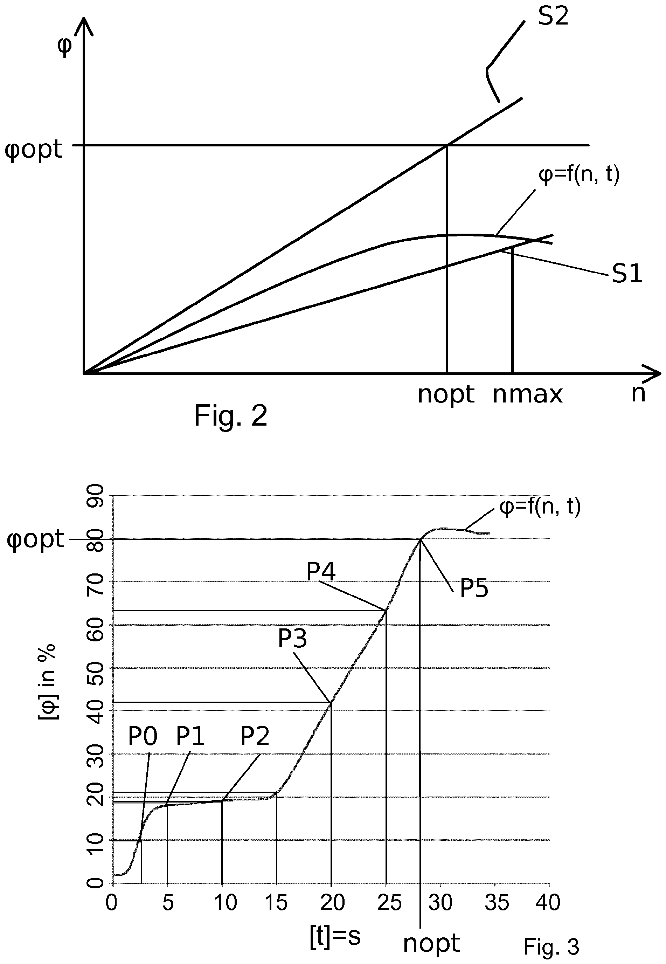

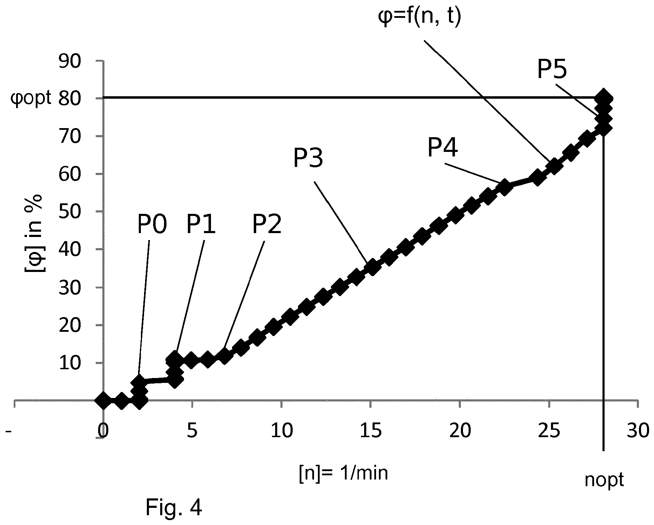

Fig. 1 zeigt eine erfindungsgemäße Ausführungsform des Rotationsviskosimeters in schematischer Darstellung, Fig. 2 zeigt ein schematisches Diagramm zur Auswahl der Schätzfunktion und Fig. 3 und Fig. 4 zeigen ein Diagramm zum Verlauf einer Ausführungsform des erfindungsgemäßen Verfahrens.

In Fig. 1 ist eine Ausführungsform des erfindungsgemäßen Rotationsviskosimeters 10 dargestellt. Das Rotationsviskosimeter 10 umfasst eine Messwelle 1 und eine durch einen Antrieb 4 angetriebene Hohlwelle 2. Diese Anordnung ist aus der AT 521097 A1 bekannt. Die Hohlwelle 2 ist hohl ausgebildet und in dieser die Messwelle 1 koaxial angeordnet. Am Ende der Messwelle 1 ist ein Messkörper 3 angeordnet. Die Messwelle 1 und die Hohlwelle 2 ragen mit einem ihrer Enden, bei dieser Ausführungsform dem oberen Ende bzw. mit dem, dem Messkörper 3 gegenüberliegenden, Ende, in ein Gehäuse 5 hinein. Das Gehäuse 5 ist mit der Hohlwelle 2 verbunden und dreht mit dieser mit. In dem Gehäuse 5 ist ein als Feder ausgebildetes Koppelelement 6 angeordnet. Die Feder ist zwischen dem Gehäuse 5 und der Messwelle 1 angeordnet und an diesen jeweils mit einem Ende befestigt. Während der Messung wird der Messkörper 3 in einen Messbecher 7 mit einer Probe 9 getaucht und die Hohlwelle 2 durch den Antrieb 4 angetrieben. Durch die Befestigung der Feder an der Messwelle 1 und dem Gehäuse 5 und der Befestigung des Gehäuses 5 an der Hohlwelle 2 wird die Feder durch den Widerstand des Messkörpers 3 in der Probe 9 und dessen Gegendrehmoment auf die Messwelle 1 gedehnt, wenn die Hohlwelle 2 bzw. die Messwelle 1 durch den Antrieb 4 angetrieben wird. Das Koppelelement 6 bzw. die Feder weist eine spezielle Charakteristik auf und besitz eine maximalen Winkelauslenkung ϕₘₐₓ. Wird das Koppelelement 6 bzw. die Feder über die maximale Winkelauslenkung ϕₘₐₓ hinaus verformt kann diese möglicherweise Schaden nehmen oder nicht mehr selbstständig, vollständig elastisch zurückverformt werden. Die optimale Winkelauslenkung ϕₒₚₜ des Koppelelements 6 bzw. der Feder ist diejenige Winkelauslenkung des Koppelements bei der der geringste Messfehler auftritt. Diese ist meist durch die Hersteller der Viskosimeter bzw. der Koppelelemente 6 angegeben. Die optimale Winkelauslenkung ϕₒₚₜ ist stets kleiner als die maximale Winkelauslenkung ϕₘₐₓ.

Das Rotationsviskosimeter 10 umfasst weiters eine Winkelmesseinheit 8 die derart zu der Messwelle 1 angeordnet und ausgebildet ist, dass die Winkeldifferenz und/oder die Winkelauslenkung ϕ zwischen der Hohlwelle 2 und der Messwelle 1 im Messbetrieb messbar ist.

Das Rotationsviskosimeter 10 umfasst weiters eine Auswerteeinheit 12, wobei mit der Auswerteeinheit 12 des Viskosimeters 10 die Drehzahl des Antriebs 4 geregelt bzw. gesteuert werden kann und die Messwerte der Winkelmesseinheit 8 zugeführt werden.

Der Auswerteinheit 12 wird die durch die Winkelmesseinheit 8 gemessene Winkelauslenkung ϕ des Koppelements 6 bzw. die durch die Winkelmesseinheit 8 gemessenen Messwerte zugeführt. In der Auswerteeinheit 12 kann weiters die optimale Winkelauslenkung ϕₒₚₜ des Koppelelements 6 in der Auswerteeinheit 12 hinterlegt sein oder diese vor Beginn der Messung der Auswerteeinheit 12 zugeführt werden.

Dem Fachmann sind darüber hinaus unterschiedliche Anordnungen zur Lagerung der Messwelle 1 und des Messkörpers 3 mit Edelsteinspitzenlagern, Kugellagern etc. bekannt. Weiters ist die Anbringung der Koppelelemente 6 und Drehwinkelmessung 8 unter Verwendung von einfachen Messwellen 1 oder Hohlwellen 2 bekannt, die für das erfindungsgemäße Verfahren eingesetzt werden können, exemplarisch sei hier die in der US 2,679,750 beschriebene Anordnung genannt oder die in der AT508705B1 beschriebene Anordnung der Anmelderin. Im Allgemeinen werden bei der Durchführung der Messungen der Viskosität über einen weiten Viskositätsmessbereich unterschiedliche Rotationsviskosimeter 10 mit unterschiedlicher Charakteristik der Koppelelemente 6 verwendet.

Alternativ kann das Koppelelement 6 auch als Torsionselement ausgebildet sein. So kann beispielsweise die Messwelle 1 am Ende, an dem sie mit dem Gehäuse 5 verbunden ist einen Torsionsdraht aufweisen, der in der Achse der Messwelle 1 angeordnet ist und eine elastische Torsion im Messbetrieb erfährt. Diese Torsion oder Verdrehung kann dann mittels Dehnmessstreifen oder anderer Messsensoren aufgenommen und für die Auswertung herangezogen werden.

Nachstehend wird eine Ausführungsform des erfindungsgemäßen Verfahrens anhand des Diagramms der Fig. 3 und Fig. 4 beispielhaft beschrieben. In Fig. 3 ist der Winkelauslenkung ϕ über die Zeit t aufgetragen und in Fig. 4 der Winkelauslenkung ϕ über die Drehzahl n.

Vor Beginn der Messung wird die Probe 9 in einen Messbehälter 7 gefüllt und in einem erfindungsgemäßen Rotationsviskosimeter 10 positioniert. An der Messwelle 1 wird ein Messkörper 3 angebracht und über dem Messbehälter 7 positioniert. In einem ersten Schritt wird der Messkörper 3 in den Messbehälter 7 und in die darin befindliche Probe 9 eingetaucht. In einem zweiten Schritt wird dann die Drehzahl n aus dem Stillstand erhöht und ein erster Messpunkt P₀ mit einer Drehzahl n₀ angefahren. Nach einem Einschwingvorgang, also wenn eine stabile Winkelauslenkung ϕ innerhalb definierter Genauigkeit erreicht wird, wird die Winkelauslenkung ϕ₀ mit der Winkelmesseinheit 8 gemessen und die Drehzahl n in einen zweiten Messpunkt P₁ erhöht. Die Drehzahl n₁ kann dabei beispielsweise doppelt so groß sein wie die des Messpunktes P₀. Unmittelbar nach Erreichen der Drehzahl n1 wird die Winkelauslenkung ϕ₁ gemessen. Nach dem Einschwingvorgang im Punkt P₁ wird dann die Winkelauslenkung ϕ_{1.1} bei der Drehzahl n1 im Messpunkt P₁ gemessen. Ausgehend vom Messpunkt P₁ wird die Drehzahl n ausgehend vom Messpunkt P₁ weiter in einen Messpunkt P₂ mit Drehzahl n₂ erhöht, beispielsweise verdoppelt, die Messung der Winkelauslenkung ϕ₂ erfolgt dann direkt bei erreichen der Drehzahl n₂ oder nach dem Einschwingen der Winkelauslenkung ϕ, also im stationären Zustand. Der stationär bzw. eingeschwungene Zustand kann entweder durch Vorgabe eines festen Zeitintervalls für die Durchführung der Messung nach dem Erreichen der jeweiligen Drehzahl n vorgegeben werden oder durch die Ermittlung der aktuellen Winkelauslenkung ϕ durch die laufende Messung oder einzelnen Messwerten und Vorgabe eine Schwellenwertes erfolgen. Dieser Vorgang wird dann für weitere Messpunkte P₃, P₄ und P₅ wiederholt.

In einem dritten Schritt wird durch die Auswerteeinheit 12 anhand der ermittelten Winkelauslenkung ϕ₀, ϕ₁, ϕ₂, ϕ₃, ϕ₄, ϕ₅,..., der Drehzahlen n₁, n₂, n_{3'}, n₄, n₅... bzw. anhand der Messpunkte P₀, P₁, P₂, P₃, P₄, P₅,... eine Schätzfunktion ϕ = f(n, t) (Fig. 3) für den Zusammenhang zwischen der Drehzahl n und der Winkelauslenkung ϕ für die untersuchte Probe 9 ermittelt. Die Schätzfunktion ϕ = f(n, t) gibt sodann den Zusammenhang zwischen Drehzahl n und Winkelauslenkung ϕ für die jeweilige mit dem spezifischen Messkörper 3 untersuchte Probe 9 an. Mit Hilfe der Schätzfunktion ϕ = f(n, t) wird dann in einem vierten Schritt die optimale Drehzahl nₒₚₜ für den vorliegenden Messkörper 3 und die jeweilige Probe 9 ermittelt.

Bevorzugt wird jedoch das Erreichen des stationären Zustandes in den einzelnen Messpunkten P₀, P₁, P₂, P₃, P₄, P₅, ... nicht abgewartet, sondern die Schätzfunktion f₍ₙ₎=ϕ berücksichtigt bereits weitere bzw. laufende Messwerte vor dem Erreichen des stationären Zustandes. Die Modellbildung erfolgt hier also als ϕ = f(n, t) des dynamischen Systems. Damit kann die Messung nach dem zumindest einen Anfangswert, der im stationären Zustand gemessen wird, rasch durchfahren werden und so die Dauer der Messung reduziert werden.

Das an dem Antrieb 4 bzw. der Messwelle 1 anliegende Drehmoment ist eine Funktion der Winkelauslenkung ϕ und der Federkonstante des Koppelelements 6 bzw. der Feder. Drehmoment und Drehwinkel hängen dabei für das Koppelelement 6 linear zusammen. Die optimale Winkelauslenkung ϕₒₚₜ ist daher möglichst nahe an 100 % der für das Rotationsviskosimeter 10 bzw. das Koppelelement 6 angegeben Winkelauslenkung ϕ, da dann das gemessene Drehmoment möglichst groß ist und damit der relative Fehler, der bei der Messung entsteht, am geringsten ist. Eine Winkelauslenkung ϕ von >75 % ist daher je nach Feder bzw. Koppelelement 6 wünschenswert, wobei die optimale Winkelauslenkung ϕₒₚₜ in der optimalen Drehzahl nₒₚₜ möglichst groß ist bevorzugt größer 80 % (Fig. 3) optimal größer 85 % oder 90 % der maximalen Winkelauslenkung ϕ. Bei dem in Fig. 3 dargestellten Ausführungsbeispiel liegt die optimale Winkelauslenkung ϕₒₚₜ bei 80 %, also am Ende des linearen Bereichs, mit einer Drehzahl von 28 1/min (Fig. 4).

In einem fünften Schritt wird dann die tatsächliche Winkelauslenkung ϕ in der optimalen, anhand der Schätzfunktion ϕ = f(n, t) ermittelten Drehzahl nₒₚₜ gemessen und die Viskosität aus den Messkörperparametern, der Drehzahl n des Antriebs 4 und dem Drehmoment bzw. der Winkelauslenkung ϕ berechnet.

Da die Feder bzw. das Koppelelement 6 beim Einsetzten des Messkörpers 3 in das Rotationsviskosimeter 10 ausgelenkt sein kann, kann die Winkelauslenkung ϕ optional im ersten Schritt bzw. im Messpunkt P₀ auf annähernd oder genau 0° gebracht werden. Dazu wird beispielsweise die Winkelauslenkung ϕ der Messachse 1 gegenüber der Motorachse gemessen und eine Drehzahl n ermittelt, die zu einer Winkelauslenkung ϕ von 0° führt und ausgehend von diesem Nullpunkt dann das Verfahren mit der Messung der Winkelauslenkung ϕ in diesem neuen Messpunkt P₀ begonnen. Da dynamische Komponenten des Messkörpers 3 diese Berechnung verfälschen können, kann dieser Schritt beliebig oft iteriert werden, um eine noch genauere Ausgangssituation zu erhalten.

Dem Messverfahren werden in einer weiteren optionalen Ausführungsform des erfindungsgemäßen Verfahrens zur Messung der Viskosität der Probe 9 eine Anzahl von Messwellen 1 und/oder Messkörper 3 zur Verfügung gestellt. Die Messwellen 1 und Messkörper 3 weisen jeweils unterschiedliche Charakteristiken auf, die für jeweils unterschiedliche Proben 9 mit unterschiedlichen Viskositäten optimale Messergebnisse liefern. Im ersten Schritt wird ein beliebiger Messkörper 3 bzw. eine beliebige Messwelle 1 an dem Rotationsviskosimeter 10 montiert und über der Probe 9 positioniert. Die ersten drei Verfahrensschritte werden dann mit der ersten Messwelle 1 und dem ersten Messkörper 3 wie zuvor beschreiben durchgeführt und die Schätzfunktion ϕ = f(n, t) und/ oder die optimale Drehzahl nₒₚₜ durch die Auswerteeinheit 12 ermittelt. Die ermittelte Schätzfunktion ϕ = f(n, t) und/oder die ermittelte optimale Drehzahl nₒₚₜ wird dann mit der Charakteristik der montierten ersten Messwellen 1 und dem montierten ersten Messkörper 3 oder deren maximalen Drehzahlen nₘₐₓ verglichen. Dann wird aus dem Vergleich ermittelt, ob die erste Messwelle 1 bzw. der erste montierte Messkörper 3 die Messung für die vorliegende Probe 9 in den bevorzugten Winkelauslenkungen ϕₒₚₜ ausführen kann. Kann die optimale Drehzahl nₒₚₜ für die Probe 9 mit der vorliegenden Messwelle 1 und dem vorliegenden Messkörper 3 erreicht werden, wird die Viskosität dann in der optimalen Drehzahl nₒₚₜ angefahren und die Winkelauslenkung ϕ in dieser Drehzahl gemessen. Wird festgestellt, dass die vorliegende Messwelle 1 und der vorliegende Messkörper 3 die Messung der Viskosität der Probe 9 nicht unter den optimalen Bedingungen ausführen können, wird die ermittelte Schätzfunktion ϕ = f(n, t) und/oder die ermittelte optimale Drehzahl nₒₚₜ dann mit den Charakteristiken der anderen Messwellen 1 und Messkörpern 3 in Kombination mit der Probe 9 verglichen und ein optimaler Messkörper-Proben- und/oder eine optimale Messwellen-Probenkombination 1 für die zu untersuchende Probe 9 ermittelt und dem Benutzer mitgeteilt. Die Viskosität der Probe 9 wird dann mit der optimalen Messwelle 1 oder dem optimalen Messkörper 3 im fünften Schritt ermittelt oder der erste bis vierte Verfahrensschritt so lange wiederholt bis die optimale Messwelle 1 und der optimale Messkörper 3 gefunden wurden und mit diesen die Messung der Viskosität der Probe 9 unter der optimalen Drehzahl nₒₚₜ bzw. der optimalen Winkelauslenkung ϕₒₚₜ durchgeführt und dann die Viskosität in diesem Messpunkt durchgeführt.

Die Geschwindigkeit der Messung kann erhöht werden, indem die Schätzfunktion ϕ = f(n, t) neben der Drehzahl n und der Winkelauslenkung ϕ auch die zeitliche Entwicklung der Messpunkte in den Schätzalgorithmus einbezieht und damit die Vorhersage der optimalen Drehzahl nₒₚₜ vor der Erreichung des stationären Zustandes der Auslenkung des Koppelelements 6 bzw. der Feder berechnet.

Optional kann dem Verfahren auch zusätzlich oder alternativ austauschbare Koppelelementen 6 und/oder austauschbare Winkelmesseinheiten 8 und/oder mehrere Rotationsviskosimeter 10 zur Verfügung gestellt werden und anhand der ermittelten Schätzfunktion ϕ = f(n, t) die optimale Winkelmesseinheit 8 und/oder das optimale Koppelelement 6 und/oder ein optimales oder für die Probe 9 besser geeignetes Rotationsviskosimeter 10 empfohlen oder angezeigt werden und die Messung der Viskosität dann mit diesen erfolgen. Alternativ kann dem Benutzer auch eine Warnung ausgegeben bzw. angezeigt werden, dass das verwendete Koppelelement 6, die Winkelmesseinheit 8, das Rotationsviskosimeter 10, die Messwelle 1 und/oder der Messkörper 3 zu falschen oder ungenauen Ergebnissen führen wird.

Optional kann bei dem erfindungsgemäßen Verfahren die Drehzahl n so lange erhöht werden bis eine maximale Federauslenkung bzw. maximale Winkelauslenkung ϕₘₐₓ von 105 % des Koppelelements 6 vorliegt oder ein Anschlag in der Winkelauslenkung ϕₘₐₓ erreicht wird. Bei Vorliegen dieser maximalen Winkelauslenkung ϕₘₐₓ kann dann die Messung unterbrochen werden und es wird eine Empfehlung zur Montage einer anderen Messwelle 1 oder eines anderen Messkörpers 3 ausgegeben.

Alternativ kann vorgesehen sein, dass anhand des erfindungsgemäßen Verfahrens ermittelt wird, ob die Messung in beispielsweise durch eine Norm vorgegebenen Drehzahlen für die vorliegende Probe 9 untersucht werden kann und dann die für diese Drehzahlen n und die vorliegende Probe 9 optimale Messwelle 1, der optimale Messkörper 3, die optimale Winkelmesseinheit 8, das optimale Koppelelement 6 und/oder ein optimales Rotationsviskosimeter 10 ausgegeben oder angezeigt werden.

Die Schätzfunktion ϕ = f(n, t) kann bei dem erfindungsgemäßen Verfahren beispielsweise anhand der nachstehenden Optionen ermittelt werden:
So kann beispielsweise die Berechnung der Änderung der Auslenkung mittels einer Differenzbildung zweier Messwerte und anschließendem "Infinite-Impulse-Response Filter" zweiter Ordnung realisiert und anhand der Ergebnisse die Schätzfunktion ϕ = f(n, t) ermittelt.

Optional kann auch mittels eines Recursive-Least-Square Algorithmus online in Echtzeit ein zeitdiskretes Systemmodell niedriger Ordnung identifiziert und aus dessen Parametern die Schätzfunktion ϕ = f(n, t) berechnet werden. Die Messung wird dann in weiteren Messpunkten P fortgesetzt und die berechnete Schätzfunktion ϕ = f(n, t) erneut ermittelt, bis diese numerisch stabil ist, d.h. in einem definierten Bereich über eine gewisse Zeitspanne und weitere Messpunkte P konstant bleibt und dann die Schätzfunktion ϕ = f(n, t) bestätigt und mit dem Verfahren fortgesetzt.

Alternativ kann die Schätzfunktion ϕ = f(n, t) auch mittels eines Kalmanfilters zur Parameterschätzung online in Echtzeit ein zeitdiskretes Systemmodell niedriger Ordnung identifiziert und aus dessen Parametern die Schätzfunktion ϕ = f(n, t) berechnet. Sobald diese berechnete Schätzfunktion ϕ = f(n, t) in weiteren Messpunkten P numerisch stabil ist, d.h. in einem definierten Bereich über eine gewisse Zeitspanne liegt, wird die Schätzfunktion ϕ = f(n, t) bestätigt und mit dem Verfahren fortgesetzt.

In einer weiteren optionalen Ausführungsform können dem Verfahren auch zusätzlich Tabellen, Modellparameter und/oder Werte, Kalibrationsmodelle und Funktionen von Referenzstoffen hinterlegt sein, die bei der Erstellung der Schätzfunktion ϕ = f(n, t) mit einbezogen werden.

In Fig. 2 ist in einem Diagramm die Auswahl eines geeigneten Messkörpers 3 dargestellt. Das Rotationsviskosimeter 10 bzw. dessen Koppelelement 6 weist eine optimale Winkelauslenkung ϕₒₚₜ auf. Das Verhalten der rein newtonschen Probe 9 mit dem Messkörper 3 und dessen Charakteristik S1 ergibt bereits bei kleinen Drehzahlen, anhand der ermittelten Schätzfunktion ϕ = f(n, t), dass mit dieser Messkörper-Probenkombination der optimale Auslenkungswinkel von 95 % der maximalen Winkelauslenkung ϕₘₐₓ vor Erreichen der höchsten zulässigen maximalen Drehzahl nₘₐₓ nicht möglich ist.

Aus dem Zusammenhang der Drehzahl n mit der Winkelauslenkung ϕ und der in der Auswerteeinheit 12 hinterlegten Berechnung des Drehmoments, kann der für die vorliegende Probe 9 bzw. deren Viskosität eine passende Messkörper-Drehzahlkombination bzw. der Messkörper 3 mit der besten Charakteristik S2 für diese Probe 9 vorgeschlagen werden. Dabei kann auf die für den Benutzer zur Verfügung stehenden Messkörper 3 Rücksicht genommen werden. Sollte mit den zur Verfügung stehenden Messkörpern 3, Messwellen 1 und Drehzahlen n keine Versuchsdurchführung möglich sein, wird dem Benutzer der Wechsel des Rotationsviskosimeters 10 oder des Koppelelements 6 empfohlen.

Fig. 3 zeigt den zeitlichen Verlauf der Messpunkte P₀, P₁, P₂, P₃, P₄, P₅, ... einer tatsächlichen Messung mit der vorgeschlagenen Schätzfunktion ϕ = f(n, t). Die jeweilige Winkelauslenkung ϕ ist zur Verdeutlichung der Werte über der Zeitachse t dargestellt. Hier wird erfindungsgemäß die Drehzahl n ausgehend von null verdoppelt, bis eine Winkelauslenkung ϕ von rund 10 % im Messpunkt P₀ erreicht wird. Dieser Messwert wird hier bevorzugt mit größerer Genauigkeit bestimmt, die Winkelauslenkung ϕ₀ wird also in eingeschwungenem stationären Zustand bestimmt. Ab hier kann der weitere Drehzahlbereich vor allem bei Vorliegen streng newtonschen Verhaltens der untersuchten Flüssigkeit bzw. Probe 9 mit rascher Erhöhung der Drehzahl n durchlaufen.

In einer bevorzugten Ausführungsform wird das Verfahren bzw. die Schätzfunktion ϕ = f(n, t) und die Messpunkte P bzw. die Wertepaare für die Drehzahl n und die Winkelauslenkung ϕ auch ohne Erreichen des stationären Zustandes durchgeführt werden. Bei Erreichen der optimalen Drehzahl nₒₚₜ werden dann wieder viele Messpunkte P ermittelt, um die stationäre Winkelauslenkung ϕ des Koppelelements 6 und damit das Drehmoment ausreichend genau zu ermitteln.

Alternativ kann hier auch die Messung beendet werden und dem Benutzer ohne tatsächliche Messung die optimalen Parameter für die Durchführung der Messung angezeigt werden.

In einer weitere Ausgestaltungsform wird für die Erstellung der Schätzfunktion ϕ = f(n, t) die Flüssigkeit nach ihrer statischen Viskosität charakterisieren und dabei zwischen z.B. strukturviskos, dilatant und newtonschen Flüssigkeiten unterschieden. Dazu wird beispielsweise der rekursive Least-Square-Algorithmus um ein "exponentielles Vergessen" mit kurzer Zeitkonstante erweitert, das zeitlich aktuellere Werte bevorzugt. Während der Ausführung der einzelnen Schritte im erfindungsgemäßen Verfahren, wird anhand der Messdaten der Drehzahl n und der Winkelauslenkung ϕ die dynamische Übertragungsfunktion berechnet, aus deren Koeffizienten die Verstärkung im eingeschwungenen Zustand geschätzt und daraus ein Messpunkt auf der statischen Schergeschwindigkeit-Scherspannungskennlinie generiert. Aus dem Verlauf dieser Kennlinie wird durch die Auswerteeinheit 12 die Charakteristik der Viskosität bestimmt. Dazu wird die Änderung der Steigung zwischen den Messpunkten betrachtet. Bei positiver Änderung wird auf eine dilatante Flüssigkeit geschlossen, bei negativer Änderung auf eine strukturviskose Flüssigkeit und bei keiner bzw. linearer Änderung auf eine newtonsche Flüssigkeit geschlossen und die Charakteristik dann bei der Erstellung der Schätzfunktion ϕ = f(n, t) berücksichtigt.

In einer weiteren Ausführungsform kann die Schergeschwindigkeit-Scherspannungskennlinie nach einigen Messpunkten P durch ein Polynom niedriger Ordnung approximiert bzw. extrapoliert und der Drehzahlwert n für die optimale Scherspannung bzw. Winkelauslenkung ϕ berechnet werden. Optional und/oder zusätzlich können hierzu die Kalibrationskurven mit Modellsubstanzen für das jeweilige Verhalten mit verschiedenen Messkörpern hinterlegt werden und aus der ermittelten Schätzfunktion ϕ = f(n, t) unter Zuhilfenahme der Kalibrationskurven mit unterschiedlichen Messkörpern 3 die optimale Kombination der Versuchsdurchführung vorhergesagt und/oder vorgeschlagen werden.

## Patentansprüche

1. Verfahren zur Ermittlung der Viskosität von Stoffen mit einem Rotationsviskosimeter (10) umfassend eine durch einen Antrieb (4) angetriebene Messwelle (1), ein, insbesondere elastisches, Koppelelement (6), mit einer maximalen Winkelauslenkung (ϕₘₐₓ) und einer optimalen Winkelauslenkung (ϕₒₚₜ), wobei die optimale Winkelauslenkung (ϕₒₚₜ) kleiner ist als die maximale Winkelauslenkung (ϕₘₐₓ), wobei die Messwelle (1) über das Koppelelement (6) mit dem Antrieb (4) verbunden ist, und einen Messkörper (3), der an einem Ende der Messwelle (1) angeordnet und mit einer Probe (9) beaufschlagbar ist,
wobei eine Winkelmesseinheit (8) vorgesehen ist, die derart zu der Messwelle (1) angeordnet und ausgebildet ist, dass die Winkelauslenkung (ϕ) zwischen dem Antrieb (4) und der Messwelle (1) im Messbetrieb messbar ist, und
wobei das Rotationsviskosimeter (10) eine Auswerteinheit (12) umfasst, der die durch die Winkelmesseinheit (8) gemessene Winkelauslenkung (ϕ) des Koppelements (6) zugeführt wird, wobei die optimale Winkelauslenkung (ϕₒₚₜ) des Koppelelements (6) in der Auswerteeinheit (12) hinterlegt ist oder dieser vor Beginn der Messung zugeführt wird,
- wobei in einem ersten Schritt der Messkörper (3) in einen Messbehälter (7) mit darin befindlicher Probe (9) eingetaucht wird,
- wobei in einem zweiten Schritt die Drehzahl (n) der Messwelle (1) ausgehend von einem ersten Messpunkt (P₀) mit einer Anfangsdrehzahl (n₀), insbesondere dem Stillstand, schrittweise in zumindest zwei weitere Messpunkte (P₁, P₂) mit jeweiliger Drehzahl (n₁, n₂) erhöht und die jeweilige Winkelauslenkung (ϕ₀, ϕ₁, ϕ₂) zwischen dem Antrieb (4) und der Messwelle (1) in den einzelnen Messpunkten (P₀, P₁, P₂) ermittelt wird,
- wobei in einem dritten Schritt eine Schätzfunktion (ϕ = f(n, t)) für den Zusammenhang zwischen der Drehzahl (n) und der Winkelauslenkung (ϕ) für die Probe (9) unter Heranziehung der in den Messpunkten (P₀, P₁, P₂) ermittelten Messwerte ermittelt wird,
- wobei in einem vierten Schritt eine optimale Drehzahl (nₒₚₜ) anhand der Schätzfunktion (ϕ = f(n, t)) ermittelt wird, bei der eine zuvor definierte optimale Winkelauslenkung (ϕₒₚₜ) vorliegt und
- wobei in einem fünften Schritt die Viskositätsmessung der Probe (9) in der optimalen Drehzahl (nₒₚₜ) durchgeführt wird.

2. Verfahren nach Anspruch 1, **dadurch gekennzeichnet, dass** die optimale Winkelauslenkung (ϕₒₚₜ) mindestens 75 %, insbesondere größer 80 %, bevorzugt größer als 85 % besonders, bevorzugt 90 % der maximalen Winkelauslenkung (ϕₘₐₓ) des Koppelelements (6) beträgt.

3. Verfahren nach Anspruch 1 oder 2, **dadurch gekennzeichnet, dass** für die Messung der Viskosität der Probe (9) eine Anzahl von Messwellen (1) und/oder Messkörper (3) zur Verfügung gestellt wird, die jeweils optimale Charakteristiken für jeweilige Proben (9) mit unterschiedlichen Viskositäten aufweisen, wobei eine beliebige erste Messwelle (1) und/oder Messkörper (3) für den ersten bis dritten Schritt des Verfahrens herangezogen wird,
wobei im vierten Schritt die ermittelte optimale Drehzahl (nₒₚₜ) und/oder die Schätzfunktion (ϕ = f(n, t)) mit für die Messung vorgeschriebenen definierten Drehzahlen (nₛₒₗₗ) verglichen wird und dass anhand der Charakteristik der Messwellen (1) und/oder Messkörper (3) für die vorliegende Probe und/oder zuvor gemessene Referenzflüssigkeiten die optimale Messwelle (1) und/oder der optimale Messkörper (3) für die zu untersuchende Probe (9) ermittelt wird,
und dass die ermittelte optimale Messwelle (1) für die Messung der Viskosität der Probe (9) im fünften Schritt herangezogen wird.

4. Verfahren nach Anspruch 3, **dadurch gekennzeichnet, dass** der erste bis vierte Verfahrensschritt mit der ermittelten optimalen Messwelle (1) und/oder dem optimalen Messkörper (3) wiederholt wird.

5. Verfahren nach einem der vorangehenden Ansprüche, **dadurch gekennzeichnet, dass** im zweiten Schritt die Drehzahl (n) der Messwelle (1) ausgehend von dem ersten Messpunkt (P₀) zu den jeweiligen weiteren Messpunkten (P₁, P₂) mit jeweiliger Drehzahl (n₁, n₂) verdoppelt wird

6. Verfahren nach einem der vorangehenden Ansprüche, **dadurch gekennzeichnet, dass** im ersten oder zu Beginn des zweiten Schrittes die Winkelauslenkung (ϕ₀) im ersten Messpunkt (P₀) auf einen definierten Wert, insbesondere 0°, kalibriert oder zurückgestellt wird.

7. Verfahren nach einem der vorangehenden Ansprüche, **dadurch gekennzeichnet, dass** die jeweilige Winkelauslenkung (ϕ₀, ϕ₁, ϕ₂) in jedem Messpunkt (P₀, P₁, P₂) im stationären Zustand ermittelt wird.

8. Verfahren nach einem der vorangehenden Ansprüche, **dadurch gekennzeichnet, dass** die Schätzfunktion (ϕ = f(n, t)) durch Differenzenbildung zweier Messwerte der Winkelauslenkung (ϕ₀, ϕ₁, ϕ₂) und Heranziehung eines Infinite-Impulse-Response Filters ermittelt wird.

9. Verfahren nach einem der vorangehenden Ansprüche, **dadurch gekennzeichnet, dass** die Schätzfunktion (ϕ = f(n, t)) durch Heranziehung eines Recursive-Least-Square Algorithmus oder eines Kalmanfilters zur Parameterschätzung ermittelt wird.

10. Verfahren nach einem der vorangehenden Ansprüche, **dadurch gekennzeichnet, dass** im zweiten Schritt die Drehzahl (n) so lange erhöht wird, bis eine zuvor definierte maximale Winkelauslenkung (ϕₘₐₓ) vorliegt, wobei vorzugsweise bei Vorliegen der maximalen Winkelauslenkung (ϕₘₐₓ) die Messung unterbrochen wird.

11. Verfahren nach einem der vorangehenden Ansprüche, **dadurch gekennzeichnet, dass** zur Ermittlung der Schätzfunktion (ϕ = f(n, t)) eine Anzahl von Modellparametern und/oder Vorhersagemodellen und/oder anhand von Referenzstoffen ermittelter Kalibrationsmodelle herangezogen wird.

12. Verfahren nach einem der vorangehenden Ansprüche, **dadurch gekennzeichnet, dass** für die Messung der Viskosität der Probe (9) eine Anzahl von austauschbaren Koppelelementen (6) und/oder Winkelmesseinheiten (8) und/oder Rotationsviskosimetern (10) mit jeweils unterschiedlichen optimalen Winkelauslenkungen (ϕₒₚₜ) zur Verfügung gestellt wird, die jeweils optimale Charakteristiken für Proben (9) mit unterschiedlichen Viskositäten aufweisen und wobei jeweilige optimale Winkelauslenkung (ϕₒₚₜ) des Koppelelements (6) in der Auswerteeinheit (12) oder der jeweiligen Auswerteeinheit (12) hinterlegt ist oder dieser vor Beginn der Messung zugeführt wird,
wobei im ersten Schritt ein beliebiges erstes Koppelelement (6) und/oder eine beliebige erste Winkelmesseinheit (8) und/oder ein beliebiges erstes Rotationsviskosimeter (10) für den ersten bis dritten und/oder vierten Schritt des Verfahrens herangezogen wird,
und wobei im vierten Schritt die ermittelte optimale Drehzahl (nₒₚₜ) und/oder die Schätzfunktion (ϕ = f(n, t)) mit für die Messung vorgeschriebenen definierten Drehzahlen (nₛₒₗₗ) verglichen wird und
dass anhand der Charakteristik der Koppelelemente (6) und/oder Winkelmesseinheiten (8) das optimale Koppelelement (6) und/oder die optimale Winkelmesseinheit (8) für die zu untersuchende Probe (9) ermittelt und zur Messung der Viskosität herangezogen wird.

13. Rotationsviskosimeter (10) zur Messung der Viskosität von Stoffen, umfassend eine durch einen Antrieb (4) angetriebene Messwelle (1), ein, insbesondere elastisches, Koppelelement (6), insbesondere eine Feder, mit einer maximalen Winkelauslenkung (ϕₘₐₓ) und einer optimalen Winkelauslenkung (ϕₒₚₜ), wobei die optimale Winkelauslenkung (ϕₒₚₜ) kleiner ist als die maximale Winkelauslenkung (ϕₘₐₓ), wobei die Messwelle (1) über das Koppelelement (6) mit dem Antrieb (4) verbunden ist, und einen Messkörper (3), der an einem Ende der Messwelle (1) angeordnet und mit einer Probe (9) beaufschlagbar ist,
wobei eine Winkelmesseinheit (8) vorgesehen ist, die derart zu der Messwelle (1) angeordnet und ausgebildet ist, dass die Winkelauslenkung (ϕ) zwischen dem Antrieb (4) und der Messwelle (1) im Messbetrieb messbar ist,
**dadurch gekennzeichnet, dass** das Rotationsviskosimeter (10) eine Auswerteeinheit (12) aufweist, wobei der Auswerteeinheit (12) die durch die Winkelmesseinheit (8) gemessene Winkelauslenkung (ϕ) des Koppelements (6) zuführbar ist, und wobei die optimale Winkelauslenkung (ϕₒₚₜ) des Koppelelements (6) in der Auswerteeinheit (12) hinterlegt ist oder dieser vor Beginn der Messung zuführbar ist,
wobei das Rotationsviskosimeter (10) und die Auswerteeinheit (12) derart ausgebildet und programmiert ist, dass das Verfahren nach einem der Ansprüche 1 bis 12 durchführbar ist.

## Claims

1. Method for determining the viscosity of substances using a rotational viscometer (10) comprising a measuring shaft (1) driven by a drive (4), a coupling element (6), in particular an elastic coupling element, having a maximum angular deflection (φₘₐₓ) and an optimum angular deflection (φₒₚₜ), wherein the optimum angular deflection (φₒₚₜ) is smaller than the maximum angular deflection (φₘₐₓ), wherein the measuring shaft (1) is connected through the coupling element (6) to the drive (4), and a measuring body (3) which is arranged at one end of the measuring shaft (1) and can be acted upon by a sample (9),
wherein an angle measuring unit (8) is provided which is arranged relative to the measuring shaft (1) and designed in such a way that the angular deflection (φ) between the drive (4) and the measuring shaft (1) can be measured during measuring operation, and
wherein the rotational viscometer (10) comprises an evaluation unit (12) to which the angular deflection (φ) of the coupling element (6) measured by the angle measuring unit (8) is fed, wherein the optimum angular deflection (φₒₚₜ) of the coupling element (6) is stored in the evaluation unit (12) or is fed thereto before the measurement begins,
- wherein in a first step the measuring body (3) is immersed in a measuring container (7) in which the sample (9) is located,
- wherein in a second step the rotational speed (n) of the measuring shaft (1), proceeding from a first measuring point (P₀) at an initial rotational speed (n₀), in particular standstill, is increased stepwise to at least two further measuring points (P₁, P₂) at respective rotational speeds (n₁, n₂) and the respective angular deflection (φ₀, φ₁, φ₂) between the drive (4) and the measuring shaft (1) is determined at the individual measuring points (P₀, P₁, P₂),
- wherein in a third step an estimation function (φ = f(n, t)) is determined for the relationship between the rotational speed (n) and the angular deflection (φ) for the sample (9) using the measured values determined at the measuring points (P₀, P₁, P₂),
- wherein in a fourth step, on the basis of the estimation function (φ = f(n, t)), an optimum rotational speed (nₒₚₜ) is determined at which a previously defined optimum angular deflection (φₒₚₜ) is present, and
- wherein in a fifth step the viscosity of the sample (9) is measured at the optimum rotational speed (nₒₚₜ).

2. Method according to claim 1, **characterised in that** the optimum angular deflection (φₒₚₜ) is at least 75%, in particular greater than 80%, preferably greater than 85%, most preferably 90%, of the maximum angular deflection (φmax) of the coupling element (6).

3. Method according to claim 1 or 2, **characterised in that** for the measurement of the viscosity of the sample (9) a number of measuring shafts (1) and/or measuring bodies (3) are provided which each have optimum characteristics for respective samples (9) having different viscosities, wherein any first measuring shaft (1) and/or measuring body (3) is used for the first to third steps of the method,
wherein in the fourth step the determined optimum rotational speed (nₒₚₜ) and/or the estimation function (φ = f(n, t)) is compared to defined rotational speeds (nₛₒₗₗ) prescribed for the measurement, and **in that** the optimum measuring shaft (1) and/or the optimum measuring body (3) for the sample (9) to be examined is determined on the basis of the characteristics of the measuring shafts (1) and/or measuring bodies (3) for the sample present and/or previously measured reference liquids,
and **in that** the determined optimum measuring shaft (1) is used for measuring the viscosity of the sample (9) in the fifth step.

4. Method according to claim 3, **characterised in that** the first to fourth method steps are repeated using the determined optimum measuring shaft (1) and/or the optimum measuring body (3).

5. Method according to any one of the preceding claims, **characterised in that** in the second step the rotational speed (n) of the measuring shaft (1) is doubled proceeding from the first measuring point (P₀) to the respective further measuring points (P₁; P₂) at the respective rotational speed (n₁; n₂).

6. Method according to any one of the preceding claims, **characterised in that**, in the first step or at the beginning of the second step, the angular deflection (φ₀) in the first measuring point (P₀) is calibrated or reset to a defined value, in particular 0°.

7. Method according to any one of the preceding claims, **characterised in that** the respective angular deflection (φ₀, φ₁, φ₂) is determined at each measuring point (P₀, P₁, P₂) in a steady state.

8. Method according to any one of the preceding claims, **characterised in that** the estimation function (φ = f(n, t)) is determined by taking the difference between two measured values for the angular deflection (φ₀, φ₁, φ₂) and using an infinite impulse response filter.

9. Method according to any one of the preceding claims, **characterised in that** the estimation function (φ = f(n, t)) is determined by using a recursive least-squares algorithm or a Kalman filter for parameter estimation.

10. Method according to any one of the preceding claims, **characterised in that** in the second step the rotational speed (n) is increased until a previously defined maximum angular deflection (φₘₐₓ) is present, wherein the measurement is preferably interrupted when the maximum angular deflection (φₘₐₓ) is present.

11. Method according to any one of the preceding claims, **characterised in that** a number of model parameters and/or prediction models and/or calibration models determined on the basis of reference substances are used to determine the estimation function (φ = f(n, t)).

12. Method according to any one of the preceding claims, **characterised in that** for the measurement of the viscosity of the sample (9), a number of replaceable coupling elements (6) and/or angle measuring units (8) and/or rotational viscometers (10) each having different optimum angular deflections (φₒₚₜ) are provided, and each have optimum characteristics for samples (9) having different viscosities, and wherein respective optimum angular deflection (φₒₚₜ) of the coupling element (6) is stored in the evaluation unit (12) or the respective evaluation unit (12) or is fed thereto before the measurement begins,
wherein in the first step any first coupling element (6) and/or any first angle measuring unit (8) and/or any first rotational viscometer (10) is used for the first to third and/or fourth step of the method,
and wherein in the fourth step the determined optimum rotational speed (nₒₚₜ) and/or the estimation function (φ = f(n, t)) is compared to defined rotational speeds (nₛₒₗₗ) prescribed for the measurement, and
**in that** the optimum coupling element (6) and/or the optimum angle measuring unit (8) for the sample (9) to be examined is determined on the basis of the characteristics of the coupling elements (6) and/or angle measuring units (8) and is used to measure the viscosity.

13. Rotational viscometer (10) for measuring the viscosity of substances, comprising a measuring shaft (1) driven by a drive (4), a coupling element (6), in particular an elastic coupling element, in particular a spring, having a maximum angular deflection (φₘₐₓ) and an optimum angular deflection (φₒₚₜ), wherein the optimum angular deflection (φₒₚₜ) is smaller than the maximum angular deflection (φₘₐₓ), wherein the measuring shaft (1) is connected through the coupling element (6) to the drive (4), and a measuring body (3) which is arranged at one end of the measuring shaft (1) and can be acted upon by a sample (9),
wherein an angle measuring unit (8) is provided which is arranged relative to the measuring shaft (1) and designed in such a way that the angular deflection (φ) between the drive (4) and the measuring shaft (1) can be measured during measuring operation,
**characterised in that** the rotational viscometer (10) has an evaluation unit (12), wherein the angular deflection (φ) of the coupling element (6) measured by the angle measuring unit (8) can be fed to the evaluation unit (12), and wherein the optimum angular deflection (φₒₚₜ) of the coupling element (6) is stored in the evaluation unit (12) or can be fed thereto before the measurement begins,
wherein the rotational viscometer (10) and the evaluation unit (12) are designed and programmed in such a way that the method according to any one of claims 1 to 12 can be performed.

## Revendications

1. Procédé pour déterminer la viscosité de substances à l'aide d'un viscosimètre rotatif (10) comprenant un arbre de mesure (1) entraîné par un entraînement (4), un élément de couplage (6), en particulier élastique, avec une déviation angulaire maximale (φₘₐₓ) et une déviation angulaire optimale (φₒₚₜ), dans lequel la déviation angulaire optimale (φₒₚₜ) est inférieure à la déviation angulaire maximale (φₘₐₓ), dans lequel l'arbre de mesure (1) est connecté à l'entraînement (4) par l'intermédiaire de l'élément de couplage (6), et un corps de mesure (3), qui est disposé à une extrémité de l'arbre de mesure (1), et peut être sollicité avec un échantillon (9),
dans lequel une unité de mesure d'angle (8) est prévue, qui est disposée et conçue par rapport à l'arbre de mesure (1) de sorte que la déviation angulaire (φ) entre l'entraînement (4) et l'arbre de mesure (1) peut être mesurée en mode de mesure, et
dans lequel le viscosimètre rotatif (10) comprend une unité d'évaluation (12) à laquelle est amenée la déviation angulaire (φ) de l'élément de couplage (6) mesurée par l'unité de mesure d'angle (8), dans lequel la déviation angulaire optimale (φₒₚₜ) de l'élément de couplage (6) est enregistrée dans l'unité d'évaluation (12) ou est amenée à celle-ci avant le début de la mesure,
- dans lequel, lors d'une première étape, le corps de mesure (3) est plongé dans un récipient de mesure (7) dans lequel se trouve l'échantillon (9),
- dans lequel, lors d'une deuxième étape, la vitesse de rotation (n) de l'arbre de mesure (1) est augmentée progressivement à partir d'un premier point de mesure (P₀) avec une vitesse de rotation initiale (n₀), en particulier l'arrêt, à au moins deux points de mesure supplémentaires (P₁, P₂) avec une vitesse de rotation respective (n₁, n₂) et la déviation angulaire respective (φ₀, φ₁, φ₂) entre l'entraînement (4) et l'arbre de mesure (1) est déterminée aux points de mesure individuels (P₀, P₁, P₂),
- dans lequel une fonction d'estimation (φ = f(n, t)) pour le rapport entre la vitesse de rotation (n) et la déviation angulaire (φ) est déterminée lors d'une troisième étape pour l'échantillon (9) en utilisant les valeurs de mesure déterminées aux points de mesure (P₀, P₁, P₂),
- dans lequel une vitesse de rotation optimale (nₒₚₜ) est déterminée lors d'une quatrième étape à l'aide de la fonction d'estimation (φ = f(n, t)), pour laquelle il existe une déviation angulaire optimale (φₒₚₜ) définie au préalable et
- dans lequel la mesure de viscosité de l'échantillon (9) est effectuée lors d'une cinquième étape à la vitesse de rotation optimale (nₒₚₜ).

2. Procédé selon la revendication 1, **caractérisé en ce que** la déviation angulaire optimale (φₒₚₜ) est au moins de 75 %, en particulier supérieure à 80 %, de préférence supérieure à 85 %, le plus préférentiellement 90 % de la déviation angulaire maximale (φₘₐₓ) de l'élément de couplage (6).

3. Procédé selon la revendication 1 ou 2, **caractérisé en ce que**, pour la mesure de la viscosité de l'échantillon (9), un certain nombre d'arbres de mesure (1) et/ou de corps de mesure (3) présentant respectivement des caractéristiques optimales pour des échantillons respectifs (9) de viscosités différentes est mis à disposition, dans lequel un premier arbre de mesure (1) et/ou corps de mesure (3) quelconque est utilisé pour la première à la troisième étape du procédé,
dans lequel la vitesse de rotation optimale déterminée (nₒₚₜ) et/ou la fonction d'estimation (φ = f(n, t)) sont comparées lors de la quatrième étape à des vitesses de rotation définies (nₛₒₗₗ) prescrites pour la mesure, et **en ce que**, à l'aide de la caractéristique des arbres de mesure (1) et/ou corps de mesure (3) pour l'échantillon existant et/ou des liquides de référence mesurés au préalable, l'arbre de mesure optimal (1) et/ou le corps de mesure optimal (3) est déterminé pour l'échantillon (9) à analyser,
et **en ce que** l'arbre de mesure optimal (1) déterminé est utilisé pour la mesure de la viscosité de l'échantillon (9) lors de la cinquième étape.

4. Procédé selon la revendication 3, **caractérisé en ce que** les première à quatrième étapes du procédé sont répétées avec l'arbre de mesure optimal déterminé (1) et/ou le corps de mesure optimal (3).

5. Procédé selon l'une quelconque des revendications précédentes, **caractérisé en ce que** lors de la deuxième étape, la vitesse de rotation (n) de l'arbre de mesure (1) est doublée en partant du premier point de mesure (P₀) vers les autres points de mesure respectifs (P₁; P₂) avec la vitesse de rotation respective (n₁; n₂).

6. Procédé selon l'une quelconque des revendications précédentes, **caractérisé en ce que** lors de la première étape ou au début de la deuxième étape, la déviation angulaire (φ₀) au premier point de mesure (P₀) est calibrée ou réinitialisée à une valeur définie, en particulier 0°.

7. Procédé selon l'une quelconque des revendications précédentes, **caractérisé en ce que** la déviation angulaire respective (φ₀, φ₁, φ₂) est déterminée à chaque point de mesure (P₀, P₁, P₂) à l'état stationnaire.

8. Procédé selon l'une quelconque des revendications précédentes, **caractérisé en ce que** la fonction d'estimation (φ = f(n, t)) est déterminée en faisant la différence entre deux valeurs de mesure de la déviation angulaire (φ₀, φ₁, φ₂) et en utilisant un filtre de réponse à l'impulsion infinie.

9. Procédé selon l'une quelconque des revendications précédentes, **caractérisé en ce que** la fonction d'estimation (φ = f(n, t)) est déterminée en utilisant un algorithme Recursive-Least-Square ou un filtre de Kalman pour l'estimation des paramètres.

10. Procédé selon l'une quelconque des revendications précédentes, **caractérisé en ce que** lors de la deuxième étape, la vitesse de rotation (n) est augmentée jusqu'à ce qu'une déviation angulaire maximale (φₘₐₓ) définie au préalable existe, dans lequel la mesure est de préférence interrompue en présence de la déviation angulaire maximale (φₘₐₓ).

11. Procédé selon l'une quelconque des revendications précédentes, **caractérisé en ce que**, pour déterminer la fonction d'estimation (φ = f(n, t)), un certain nombre de paramètres de modèle et/ou de modèles de prédiction et/ou de modèles de calibrage déterminés à l'aide de substances de référence est utilisé.

12. Procédé selon l'une quelconque des revendications précédentes, **caractérisé en ce que**, pour la mesure de la viscosité de l'échantillon (9), un certain nombre d'éléments de couplage interchangeables (6) et/ou d'unités de mesure d'angle (8) et/ou de viscosimètres rotatifs (10) est mis à disposition, présentant respectivement des déviations angulaires optimales différentes (φₒₚₜ), qui présentent respectivement des caractéristiques optimales pour des échantillons (9) de viscosités différentes et dans lequel la déviation angulaire optimale respective (φₒₚₜ) de l'élément de couplage (6) est enregistrée dans l'unité d'évaluation (12) ou dans l'unité d'évaluation respective (12) ou est amenée à celle-ci avant le début de la mesure,
dans lequel un premier élément de couplage (6) quelconque et/ou une première unité de mesure d'angle (8) quelconque et/ou un premier viscosimètre rotatif (10) quelconque est utilisé lors de la première étape pour la première à la troisième et/ou la quatrième étape du procédé,
et dans lequel, lors de la quatrième étape, la vitesse de rotation optimale déterminée (nₒₚₜ) et/ou la fonction d'estimation (φ = f(n, t)) est comparée à des vitesses de rotation définies (nₛₒₗₗ) prescrites pour la mesure et
**en ce qu'**à l'aide des caractéristiques des éléments de couplage (6) et/ou des unités de mesure d'angle (8), l'élément de couplage optimal (6) et/ou l'unité de mesure d'angle optimale (8) pour l'échantillon (9) à analyser est déterminé et utilisé pour la mesure de la viscosité.

13. Viscosimètre rotatif (10) pour la mesure de la viscosité de substances comprenant un arbre de mesure (1) entraîné par un entraînement (4), un élément de couplage (6), en particulier élastique, en particulier un ressort, avec une déviation angulaire maximale (φₘₐₓ) et une déviation angulaire optimale (φₒₚₜ), dans lequel la déviation angulaire optimale (φₒₚₜ) est inférieure à la déviation angulaire maximale (φₘₐₓ), dans lequel l'arbre de mesure (1) est connecté à l'entraînement (4) par l'intermédiaire de l'élément de couplage (6), et un corps de mesure (3), qui est disposé à une extrémité de l'arbre de mesure (1), et peut être sollicité avec un échantillon (9),
dans lequel une unité de mesure d'angle (8) est prévue, qui est disposée et conçue par rapport à l'arbre de mesure (1) de sorte que la déviation angulaire (φ) entre l'entraînement (4) et l'arbre de mesure (1) peut être mesurée en fonctionnement de mesure,
**caractérisé en ce que** le viscosimètre rotatif (10) présente une unité d'évaluation (12), dans lequel l'unité de mesure d'angle (12) peut être amenée la déviation angulaire (φ) de l'élément de couplage (6) mesurée par l'unité de mesure d'angle (8), et dans lequel la déviation angulaire optimale (φₒₚₜ) de l'élément de couplage (6) est enregistrée dans l'unité d'évaluation (12) ou peut être amenée à celle-ci avant le début de la mesure,
dans lequel le viscosimètre rotatif (10) et l'unité d'évaluation (12) sont conçus et programmés de sorte que le procédé selon l'une quelconque des revendications 1 à 12 peut être mis en oeuvre.
